# EUROPÄISCHE PATENTSCHRIFT

(11) **EP 3 631 275 B1**
(45) Veröffentlichungstag und Bekanntmachung des Hinweises auf die Patenterteilung: **09.06.2021**
(21) Anmeldenummer: 18719886.6
(22) Anmeldetag: 25.04.2018
(51) Int. Cl.: F16L 37/098

(54) **KUPPLUNGSELEMENT ZUM VERBINDEN EINER ERSTEN FLUIDFÜHRENDEN LEITUNG MIT EINER ZWEITEN FLUIDFÜHRENDEN LEITUNG SOWIE KUPPLUNGSANORDNUNG**
COUPLING ELEMENT FOR CONNECTING A FIRST FLUID-CONDUCTING LINE TO A SECOND FLUID-CONDUCTING LINE, AND COUPLING ASSEMBLY
ÉLÉMENT D'ACCOUPLEMENT PERMETTANT DE RACCORDER UNE PREMIÈRE CONDUITE DE FLUIDE À UNE DEUXIÈME CONDUITE DE FLUIDE AINSI QUE DISPOSITIF D'ACCOUPLEMENT

(30) Priorität: 22.05.2017 DE 102017208643
(43) Veröffentlichungstag der Anmeldung: 08.04.2020
(73) Patentinhaber: aft automotive GmbH, 48268 Greven-Reckenfeld (DE)
(72) Erfinder: WEHRMANN, Christoph, 48629 Metelen (DE)
(74) Vertreter: Dietz, Christopher Friedrich
(86) Internationale Anmeldenummer: PCT/EP2018/060631
(87) Internationale Veröffentlichungsnummer: WO 2018/215155

(56) Entgegenhaltungen:
- EP-A1- 1 380 791
- DE-A1- 3 727 858
- DE-A1-102009 033 943
- DE-B3-102006 013 899
- GB-A- 2 199 102

## Beschreibung

Die Erfindung betrifft ein Kupplungselement zum Verbinden einer ersten fluidführenden Leitung mit einer zweiten fluidführenden Leitung, wobei das Kupplungselement mit der ersten Leitung verbindbar ist und zur Aufnahme eines mit der zweiten Leitung verbindbaren und einen wenigstens teilweise umlaufenden Rastbund aufweisenden Kupplungsgegenelements ausgestaltet ist, wobei das Kupplungselement über eine Rasteinrichtung verfügt, die einen Grundkörper und einen an dem Grundkörper angeordneten, elastisch verformbaren Ring mit wenigstens einem in radialer Richtung nach innen vorstehenden Rastvorsprung aufweist, wobei in axialer Richtung gesehen zwischen einer Endanschlagsfläche des Grundkörpers und einer Rastfläche des Rastvorsprungs eine Rastaufnahme zur Aufnahme des Rastbunds vorliegt, und wobei der Ring und der Rastvorsprung derart ausgebildet sind, dass der Rastvorsprung bei Verbinden des Kupplungselements und des Kupplungsgegenelements von dem Rastbund in radialer Richtung elastisch nach außen ausgelenkt wird und nach Anordnung des Rastbunds in der Rastaufnahme eine Raststellung einnimmt, in der er den Rastbund zum Halten des Kupplungsgegenelements bezüglich des Kupplungselements rastend hintergreift. Die Erfindung betrifft weiterhin eine Kupplungsanordnung.

Das Kupplungselement ist Bestandteil der Kupplungsanordnung, mittels welcher zwei fluidführenden Leitung, also die erste fluidführende Leitung und die zweite fluidführende Leitung, bevorzugt fluiddicht miteinander verbunden werden können. Die fluidführenden Leitungen können dabei grundsätzlich beliebig ausgestaltet sein. Beispielsweise liegen eine mehrere der fluidführenden Leitungen als Rohrleitung vor. Auch eine Ausgestaltung einer oder mehrerer der fluidführenden Leitungen als Schlauchleitung kann vorgesehen sein. Die Rohrleitung zeichnet sich gegenüber der Schlauchleitung durch ihre starre Ausgestaltung aus, wohingegen die Schlauchleitung flexibel ist.

Die Kupplungsanordnung verfügt zur Herstellung der fluiddichten Verbindung zwischen der ersten fluidführenden Leitung und der zweiten fluidführenden Leitung über das Kupplungselement und das Kupplungsgegenelement. Das Kupplungselement ist beispielsweise der ersten fluidführenden Leitung zugeordnet und mit dieser verbindbar oder bereits mit ihr verbunden. Umgekehrt ist das Kupplungsgegenelement der zweiten fluidführenden Leitung zugeordnet und mit dieser verbindbar oder bereits mit ihr verbunden.

Vorzugsweise dient das Kupplungselement ausschließlich dem Halten der beiden fluidführenden Leitungen aneinander. Die fluiddichte Verbindung zwischen den beiden fluidführenden Leitungen wird hingegen bevorzugt durch ein Ineinandergreifen der fluidführenden Leitung realisiert. Beispielsweise wird also die erste fluidführende Leitung in die zweite fluidführende Leitung eingesteckt oder umgekehrt, nämlich derart, dass die beiden fluidführenden Leitungen fluiddicht miteinander verbunden sind. Beispielsweise ist hierzu an einer der fluidführenden Leitungen eine Dichtung angeordnet, welche nach dem Einbringen einer der fluidführenden Leitungen in die jeweils andere der fluidführenden Leitungen dichtend an beiden fluidführenden Leitungen anliegt.

Die Kupplungsanordnung greift nun sowohl an der ersten fluidführenden Leitung als auch an der zweiten fluidführenden Leitung an, um diese aneinander zu halten, also ein Entfernen der beiden fluidführenden Leitungen voneinander zu unterbinden. Beispielsweise sichert er hierzu die erste fluidführende Leitung in beziehungsweise an der zweiten fluidführenden Leitung, verhindert also ein Herausrutschen der ersten fluidführenden Leitung aus der zweiten fluidführenden Leitung.

Das Kupplungsgegenelement, welches der zweiten Leitung zugeordnet ist, verfügt über den zumindest teilweise umlaufenden Rastbund. Besonders bevorzugt ist der Rastbund in Umfangsrichtung bezüglich einer Längsmittelachse des Kupplungsgegenelements durchgehend ausgestaltet, liegt also durchgehend umlaufend an dem Kupplungsgegenelement vor. Das Kupplungsgegenelement ist besonders bevorzugt als Teil der zweiten Leitung ausgestaltet und insoweit permanent mit dieser verbunden. Besonders bevorzugt ist das Kupplungsgegenelement materialeinheitlich mit der zweiten Leitung ausgestaltet, insbesondere falls diese als Rohrleitung vorliegt.

Das Kupplungselement ist zur wenigstens teilweisen Aufnahme des Kupplungsgegenelements ausgestaltet. Zum fluiddichten Verbinden der beiden fluidführenden Leitungen wird insoweit das Kupplungsgegenelement in das Kupplungselement eingesteckt. Das Kupplungselement verfügt über die Rasteinrichtung, welche nach dem Einstecken des Kupplungsgegenelements in das Kupplungselement dem rastenden Halten des Kupplungsgegenelements in dem Kupplungselement dient. Die Rasteinrichtung weist den Grundkörper sowie den elastisch verformbaren Ring auf. Der Grundkörper ist vorzugsweise starr ausgestaltet oder zumindest starrer als der Ring. Der Ring ist an dem Grundkörper angeordnet, insbesondere an diesem befestigt. Besonders bevorzugt ist der Ring einstückig und/oder materialeinheitlich mit dem Grundkörper ausgestaltet. Die starrere Ausgestaltung des Grundkörpers wird in diesem Fall bevorzugt durch eine im Vergleich mit dem Ring größere Materialstärke realisiert.

Der Ring umgreift eine Längsmittelachse des Kupplungselements in Umfangsrichtung wenigstens teilweise, insbesondere vollständig. In letzterem Fall ist der Ring insoweit in Umfangsrichtung durchgehend ausgestaltet. An dem Ring ist der wenigstens eine Rastvorsprung angeordnet beziehungsweise ausgebildet, welcher in radialer Richtung nach innen ragt, also nach dem Einbringen des Kupplungsgegenelements in das Kupplungselement in Richtung des Kupplungsgegenelements ausgehend von dem Ring vorsteht. Der Rastvorsprung dient dem rastenden Halten des Kupplungsgegenelements bezüglich des Kupplungselements durch rastendes Hintergreifen des Rastbunds. Nach dem Einbringen des Kupplungsgegenelements in das Kupplungselement wirkt insoweit der Rastvorsprung mit dem Rastbund zusammen, um das Kupplungsgegenelement in dem Kupplungselement zu halten.

Das Kupplungselement verfügt über die Rastaufnahme, welche zur Aufnahme des Rastbunds nach dem Einbringen des Kupplungselements in das Kupplungselement ausgestaltet ist. Die Rastaufnahme wird in axialer Richtung bezüglich der Längsmittelachse des Kupplungselements gesehen einerseits von der Endanschlagsfläche des Grundkörpers und andererseits von der Rastfläche des Rastvorsprungs begrenzt. Nach dem Einbringen des Kupplungsgegenelements in das Kupplungselement liegt insoweit der Rastbund im Längsschnitt bezüglich der Längsmittelachse gesehen zwischen der Endanschlagsfläche und der Rastfläche vor.

Hierbei kann es vorgesehen sein, dass die Rastaufnahme in axialer Richtung größere Abmessungen aufweist als der Rastbund, um ein einfaches Einbringen des Rastbunds in die Rastaufnahme und ein zuverlässiges Verrasten mittels des Rastvorsprungs zu gewährleisten. In einer derartigen Ausgestaltung hält das Kupplungselement insoweit das Kupplungsgegenelement mit Spiel in axialer Richtung, wobei jedoch in jedem Fall mittels des Rastvorsprungs verhindert wird, dass der Rastbund ungewollt aus der Rastaufnahme heraus gelangt.

Der Ring und der Rastvorsprung sind derart ausgebildet, dass der Rastvorsprung bei Einbringen des Kupplungsgegenelements in das Kupplungselement zunächst von dem Rastbund in radialer Richtung elastisch nach außen ausgelenkt wird, wobei sich der Ring elastisch verformt. Nach Anordnung des Rastbunds in der Rastaufnahme nimmt der Rastvorsprung seine Raststellung ein, in welche er von dem Ring beziehungsweise einer Rückstellkraft des Rings gedrängt wird. In der Raststellung hintergreift er den Rastbund zum Halten des Kupplungsgegenelements bezüglich des Kupplungselements, wobei das Halten - wie bereits angedeutet - mit Spiel oder spielfrei erfolgen kann. In jedem Fall verhindert der Rastvorsprung das ungewollte Herausgelangen des Rastbunds aus der Rastaufnahme.

Ein Lösen der Verbindung zwischen den beiden fluidführenden Leitungen beziehungsweise dem Kupplungselement und dem Kupplungsgegenelement ist durch ein manuelles Angreifen an dem elastisch verformbaren Ring möglich. An dem Ring sind hierzu Betätigungsstellen vorgesehen, an welchen ein Benutzer angreifen kann. Das Angreifen erfolgt derart, dass der Rastvorsprung aus der Rastaufnahme herausgelangt und mithin den Rastbund zur Verlagerung aus der Rastaufnahme heraus freigibt. Beispielsweise erfolgt das Betätigen des Rings durch Verformen des Rings in radialer Richtung nach innen an von dem Rastvorsprung beabstandeten Betätigungsstellen. Das Verformen erfolgt dabei derart, dass der Rastvorsprung in radialer Richtung nach außen bewegt wird und bei ausreichender Verformung des Rings den Rastbund zum Verlagern aus der Rastaufnahme heraus freigibt.

Eine Kupplungsanordnung beziehungsweise ein Kupplungselement, welches nach diesem Funktionsprinzip arbeitet ist beispielsweise aus der Druckschrift DE 37 27 858 A1 bekannt. Dort ist eine Schnellverbindung zum Verbinden einer Schlauch- oder Rohrleitung beschrieben, die aus einem Kernteil und einem Gehäuseteil besteht, die jeweils mit einem Ende mit einem Schlauch, Rohr oder Gerät fest verbunden werden können. Die Abdichtung zwischen Kernteil und Gehäuseteil erfolgt über Ringdichtungen. An der Außenseite des Kernteils ist ein Ring mit einer zu dem freien Ende gerichteten Auflauffläche mit einer dieser gegenüberliegenden Anschlagfläche ausgebildet. Der Innendurchmesser des Gehäuseteils ist größer als der Außendurchmesser des Kernteils und am freien Ende der Innenwand des Gehäuseteils sind wenigstens zwei diametral gegenüberliegende Nocken mit zu dem freien Ende gerichteten Auflaufflächen und diesen gegenüberliegenden Anschlagflächen ausgebildet. Der lichte Abstand zwischen den Nocken ist etwa so groß wie der Außendurchmesser des Kernteils, und das Gehäuseteil besteht aus einem elastischen Material. Auf die Offenbarung dieser Druckschrift wird im Rahmen dieser Beschreibung vollumfänglich Bezug genommen.

Ein weiterer wesentlicher Stand der Technik ist durch DE 10 2006 013 899 B3 gegeben.

Es ist Aufgabe der Erfindung, ein Kupplungselement vorzuschlagen, welches gegenüber bekannten Kupplungselementen Vorteile aufweist, insbesondere die einfache und zuverlässige Herstellung einer fluiddichten Verbindung zwischen den beiden fluidführenden Leitungen ermöglicht.

Dies wird erfindungsgemäß mit einem Kupplungselement mit den Merkmalen des Anspruchs 1 erreicht. Dabei ist vorgesehen, dass eine Indikatoreinrichtung an der Rasteinrichtung gelagert ist und ein bezüglich eines Führungselements der Indikatoreinrichtung elastisch in radialer Richtung auslenkbares Halteelement aufweist, das in einer Ineingriffstellung in die Rastaufnahme eingreift und die Indikatoreinrichtung in axialer Richtung durch Zusammenwirken mit dem Grundkörper festsetzt, und in einer Außereingriffstellung außerhalb der Rastaufnahme vorliegt und die Indikatoreinrichtung zur Verlagerung in axialer Richtung freigibt.

Die Indikatoreinrichtung ist insoweit grundsätzlich verlagerbar an der Rasteinrichtung angeordnet, nämlich in axialer Richtung verlagerbar. Hierzu ist sie entsprechend an der Rasteinrichtung gelagert, beispielsweise verfügt die Rasteinrichtung über eine Führungseinrichtung zur linearen Führung der Indikatoreinrichtung. Die Indikatoreinrichtung weist das Führungselement und das Halteelement auf. Bevorzugt sind das Führungselement und das Halteelement einstückig und/oder materialeinheitlich miteinander ausgestaltet. Beispielsweise liegen das Führungselement und das Halteelement gemeinsam als Spritzgussteil vor. Vorzugsweise ist das Führungselement starrer ausgebildet als das elastisch auslenkbare Halteelement. Erneut kann dies durch eine größere Materialstärke des Führungselements im Vergleich mit dem Halteelement realisiert sein.

Das Halteelement ist aufgrund der elastischen Auslenkung in radialer Richtung in unterschiedlichen Stellungen anordenbar, nämlich zumindest in der Ineingriffstellung und der Außereingriffstellung. In der Ineingriffstellung greift das Halteelement in die Rastaufnahme ein und setzt mithin die gesamte Indikatoreinrichtung in axialer Richtung durch Zusammenwirken mit dem Grundkörper und/oder dem Rastvorsprung fest. Das Halteelement ragt in der Ineingriffstellung in radialer Richtung ausgehend von dem Führungselement nach innen und greift insoweit in radialer Richtung von außen in die Rastaufnahme ein. Bevorzugt wirkt das Halteelement in seiner Ineingriffstellung ausschließlich mit dem Grundkörper zum Festsetzen der Indikatoreinrichtung zusammen. Wird hingegen das Halteelement in die Außereingriffstellung verlagert, nämlich durch elastisches Auslenken, so wird die Indikatoreinrichtung zur Verlagerung in axialer Richtung freigegeben. Das bedeutet, dass in der Außereingriffstellung das Halteelement außer Eingriff mit dem Grundkörper gerät und entsprechend die Verlagerung der Indikatoreinrichtung zulässt.

Unter der Rastaufnahme ist grundsätzlich der gesamte in axialer Richtung beziehungsweise im Längsschnitt gesehen zwischen der Endanschlagsfläche und der Rastfläche, in Umfangsrichtung vollständig umlaufende Bereich zu verstehen. Die Rastaufnahme ist insoweit in Umfangsrichtung durchgehend ausgebildet und umgreift die Längsmittelachse des Kupplungselements vollständig. Sie ist in Umfangsrichtung nicht auf diejenigen Bereiche begrenzt, in welchen der Rastvorsprung vorliegt beziehungsweise die Rastvorsprünge vorliegen.

Die Verlagerung des Halteelements erfolgt durch das Kupplungsgegenelement, nämlich insbesondere dessen Rastbund. Bei dem Einbringen des Kupplungsgegenelements in das Kupplungselement tritt der Rastbund in die Rastaufnahme ein und drängt hierbei das Halteelement in radialer Richtung nach außen, nämlich aus der Rastaufnahme heraus. In Umfangsrichtung gesehen greift das Halteelement in der Ineingriffstellung benachbart zu dem Rastvorsprung in die Rastaufnahme ein. Es kann vorgesehen sein, dass das Halteelement in seiner Ineingriffstellung in axialer Richtung gesehen beiderseits mit dem Grundkörper zusammenwirkt, um die Indikatoreinrichtung bezüglich der Rasteinrichtung festzusetzen, insbesondere indem es einerseits an der Endanschlagsfläche des Grundkörpers anliegt.

Eine derartige Ausgestaltung des Kupplungselements ermöglicht eine einfache und zuverlässige Kontrolle der Rastverbindung zwischen dem Kupplungselement und dem Kupplungsgegenelement. Erst nach dem Einbringen des Kupplungsgegenelements in das Kupplungselement derart, dass der Rastbund das Halteelement aus der Rastaufnahme herausgedrängt, ist die Indikatoreinrichtung in axialer Richtung bezüglich der Rasteinrichtung verlagerbar. Während der Montage wird nun zunächst das Kupplungsgegenelement in das Kupplungselement eingebracht und nachfolgend die Indikatoreinrichtung bezüglich der Rasteinrichtung verlagert, nämlich vorzugsweise in axialer Richtung in Richtung des Rings.

Vorzugsweise kann die Indikatoreinrichtung in axialer Richtung so weit verlagert werden, bis das durch den Rastbund elastisch ausgelenkte Halteelement derart bezüglich des Rastbunds angeordnet ist, dass es diesen hintergreift und zusätzlich rastend hält. Entsprechend ist nach dem Verrasten des Halteelements mit dem Rastbund ein Zurückverlagern der Indikatoreinrichtung nicht mehr möglich. Vielmehr ist dieser nunmehr erneut bezüglich der Rasteinrichtung festgelegt. Entsprechend kann ein die Montage vornehmender Benutzer ohne weiteres an der axialen Anordnung der Indikatoreinrichtung erkennen, ob die Verbindung zwischen dem Kupplungsgegenelement und dem Kupplungselement vollständig beziehungsweise ordnungsgemäß hergestellt ist. Um eine deutliche Indikatorwirkung der Indikatoreinrichtung zu erzielen, weist bevorzugt die Indikatoreinrichtung wenigstens teilweise, insbesondere vollständig, eine andere Farbe auf als die Rasteinrichtung.

Eine weitere Ausgestaltung der Erfindung sieht vor, dass eine Verlagerung der Indikatoreinrichtung in axialer Richtung bei Vorliegen der Ineingriffstellung des Halteelements einerseits von der Endanschlagsfläche und andererseits von einem an dem Grundkörper ausgebildeten Absatz begrenzt ist. Der Absatz liegt an dem Grundkörper vor und ragt vorzugsweise in radialer Richtung nach außen. Durch den Absatz ist eine Stufe an dem Grundkörper ausgebildet, welche die Verlagerung der Indikatoreinrichtung in axialer Richtung begrenzt, sofern das Halteelement in seiner Ineingriffstellung vorliegt. Während der Absatz die Verlagerung der Indikatoreinrichtung in einer ersten axialen Richtung begrenzt, begrenzt die Endanschlagsfläche die Verlagerung in einer der ersten axialen Richtung entgegengesetzten zweiten axialen Richtung. Es kann vorgesehen sein, dass bei Vorliegen der Ineingriffstellung die Indikatoreinrichtung einerseits an der Endanschlagsfläche und andererseits an dem Absatz anliegt, wobei dies vorzugsweise für das Halteelement der Indikatoreinrichtung gilt. Bei einer derartigen Ausgestaltung des Kupplungselements ist die Indikatoreinrichtung in axialer Richtung bei Vorliegen der Ineingriffstellung vollständig festgesetzt, sodass eine Fehlbedienung zuverlässig unterbunden wird.

Eine weitere bevorzugte Ausführungsform der Erfindung sieht vor, dass das Halteelement derart ausgestaltet ist, dass es bei einem Einbringen des Rastbunds in die Rastaufnahme in radialer Richtung nach außen aus der Rastaufnahme herausgedrängt und in die Außereingriffstellung verlagert wird. Hierzu weist das Halteelement vorzugsweise eine in radialer Richtung nach innen gerichtete Schrägfläche auf, mit welcher der Rastbund bei seinem Einbringen in die Rastaufnahme zusammenwirkt, um das Halteelement elastisch in radialer Richtung nach außen zu drängen.

Eine Weiterbildung der Erfindung sieht vor, dass bei Anordnung des Halteelements in der Außereingriffstellung die Indikatoreinrichtung außer Eingriff mit dem Absatz vorliegt, sodass eine Verlagerung des Führungselements in Richtung des Rings freigegeben ist. Bevorzugt wird durch das Verlagern des Führungselements der zuvor mit dem Absatz in Eingriff stehende Bereich der Indikatoreinrichtung, vorzugsweise ebenfalls das Führungselement, in radialer Richtung über den Absatz hinweg angehoben, sodass der genannte Bereich nachfolgend in radialer Richtung weiter außen liegt als der Absatz. Bei der nachfolgenden Verlagerung der Indikatoreinrichtung in axialer Richtung überläuft sie beziehungsweise das Halteelement den Absatz.

Eine weitere Ausführungsform der Erfindung sieht vor, dass das Halteelement wenigstens zwei Haltearme aufweist, die in Umfangsrichtung gesehen beidseitig des Rastvorsprungs angeordnet sind. Darunter ist nicht notwendigerweise zu verstehen, dass die Haltearme in axialer Richtung in Überdeckung mit dem Halteelement vorliegen. Vielmehr können sie in axialer Richtung beziehungsweise im Längsschnitt bezüglich der Längsmittelachse des Kupplungselements gesehen durchaus benachbart zu dem Halteelement angeordnet sein. Die Haltearme sind in Umfangsrichtung voneinander beabstandet angeordnet und erstrecken sich in axialer Richtung ausgehend von dem Führungselement. Es kann vorgesehen sein, dass die beiden Haltearme jeweils in wenigstens einer axialen Stellung der Indikatoreinrichtung an dem Rastvorsprung anliegen. Beispielsweise liegt hierbei einer der Haltearme einerseits an dem Rastvorsprung und ein anderer der Haltearme andererseits an dem Rastvorsprung an. Hierdurch wird eine Führung des Halteelements beziehungsweise der Indikatoreinrichtung in Umfangsrichtung realisiert. Es ist insoweit kein Verdrehen der Indikatoreinrichtung bezüglich der Rasteinrichtung möglich.

Eine bevorzugte weitere Ausführungsform der Erfindung sieht vor, dass die wenigstens zwei Haltearme jeweils von dem Führungselement ausgehen und mittels eines von dem Führungselement beabstandeten Querstegs miteinander verbunden sind. Die Haltearme sind insoweit sowohl über das Führungselement als auch über den Quersteg miteinander verbunden. Der Quersteg erstreckt sich ausgehend von einem der Haltearme vollständig bis hin zu dem anderen der Haltearme. Der Quersteg dient einerseits der Stabilisierung der beiden Haltearme und andererseits dem Festlegen der Indikatoreinrichtung in axialer Richtung, sofern das Halteelement in seiner Ineingriffstellung vorliegt. Vorzugsweise ist der Quersteg in radialer Richtung außenseitig an den Haltearmen angeformt. Der Quersteg ist besonders bevorzugt einstückig und/oder materialeinheitlich mit beiden Haltearmen ausgeführt.

Eine Weiterbildung der Erfindung sieht vor, dass in der Ineingriffstellung der Quersteg mit dem Absatz zur Begrenzung der Verlagerung der Indikatoreinrichtung in axialer Richtung zusammenwirkt. Liegt also das Halteelement in der Ineingriffstellung vor, so greift der Quersteg an dem Absatz an. Vorzugsweise liegt eine ebene Fläche des Querstegs an einer ebenfalls ebenen Fläche des Absatzes an, wobei jede der beiden Ebenen jeweils in einer gedachten Ebene liegt, welche senkrecht auf der Längsmittelachse des Kupplungselements steht. Mit einer derartigen Ausrichtung der Flächen wird ein zuverlässiges Festsetzen der Indikatoreinrichtung in axialer Richtung bei Vorliegen der Ineingriffstellung bewirkt und andererseits ein einfaches Außereingriffbringen bei der Verlagerung des Halteelements in die Außereingriffstellung ermöglicht.

Eine weitere vorteilhafte Ausführungsform der Erfindung sieht vor, dass die Indikatoreinrichtung bei Anordnung des Halteelements in der Außereingriffstellung zur Verlagerung zwischen einer ersten Stellung und einer zweiten Stellung freigegeben ist, wobei in der ersten Stellung ein Haltevorsprung des Halteelements in axialer Richtung gesehen in Überdeckung mit der Rastaufnahme vorliegt und in der zweiten Stellung die Indikatoreinrichtung, insbesondere der Quersteg, mit dem Ring zusammenwirkt, um eine Verlagerung über die zweite Stellung hinaus zu verhindern. Die erste Stellung liegt unmittelbar nach dem Herausdrängen des Halteelements aus der Rastaufnahme durch den Rastbund, also noch vor einer Verlagerung der Indikatoreinrichtung in axialer Richtung, vor. Entsprechend liegt das Halteelement oder zumindest sein Haltevorsprung in axialer Richtung beziehungsweise im Längsschnitt gesehen in Überdeckung mit der Rastaufnahme vor.

In der Außereingriffstellung des Halteelements kann die Indikatoreinrichtung aus der ersten Stellung heraus in Richtung der zweiten Stellung beziehungsweise in diese hinein verlagert werden. In der zweiten Stellung wird die axiale Verlagerung der Indikatoreinrichtung durch das Zusammenwirken der Indikatoreinrichtung mit dem Ring begrenzt. In anderen Worten liegt die Indikatoreinrichtung, bevorzugt der Quersteg, in der zweiten Stellung an dem Ring derart an, dass die Indikatoreinrichtung von der ersten Stellung kommend nicht über die zweite Stellung hinaus verlagert werden kann.

Bevorzugt kann es vorgesehen sein, dass das Halteelement in der zweiten Stellung derart mit dem Rastbund verrastet, diesen also hintergreift, dass der Rastbund nicht nur mittels der Rasteinrichtung, also dem Rastvorsprung, sondern zusätzlich mittels des Halteelements rastend gehalten ist. Durch das Hintergreifen des Rastbunds durch das Halteelement wird die Indikatoreinrichtung in der zweiten Stellung festgesetzt, kann also nicht mehr ohne weiteres aus dieser heraus verlagert werden, insbesondere in Richtung der ersten Stellung oder in diese hinein. Durch eine derartige Ausgestaltung wird eine zusätzliche Aussteifung des Kupplungselements beziehungsweise der Kupplungsanordnung erzielt. Zudem entsteht bei dem Verrasten des Halteelements mit dem Rastbund ein Geräusch, welches als akustische Rückmeldung dient. Sobald das Geräusch auftritt kann insoweit davon ausgegangen werden, dass die Rastverbindung der beiden fluidführenden Leitungen beziehungsweise des Kupplungselements mit dem Kupplungsgegenelement ordnungsgemäß hergestellt ist.

Schließlich kann es im Rahmen einer weiteren bevorzugten Ausführungsform der Erfindung vorgesehen sein, dass der Grundkörper eine Führungseinrichtung zur linearen Führung der Indikatoreinrichtung aufweist, wobei die Führungseinrichtung in axialer Richtung gesehen in Überdeckung mit dem Ring vorliegt und die Indikatoreinrichtung in der zweiten Stellung zwischen dem Grundkörper und dem Ring vorliegt, sodass sich der Ring bei einer elastischen Verformung in radialer Richtung nach innen über die Indikatoreinrichtung an dem Grundkörper zur Begrenzung der Verformung abstützt.

Die Führungseinrichtung dient der Führung der Indikatoreinrichtung in axialer Richtung, also insbesondere zwischen der ersten Stellung und der zweiten Stellung. Die Führungseinrichtung ist an dem Grundkörper der Rasteinrichtung ausgebildet und vorzugsweise starr, insbesondere in radialer Richtung. Die Führungseinrichtung erstreckt sich in axialer Richtung bis hin zu dem Ring, sodass sie in Überdeckung mit dem Ring vorliegt. Besonders bevorzugt durchgreift sie den Ring in axialer Richtung wenigstens bereichsweise. Hierbei ist sie in radialer Richtung von dem Ring beabstandet angeordnet, sodass bei Anordnung der Indikatoreinrichtung in der ersten Stellung die elastische Verformung des Rings ohne weiteres möglich ist.

In der zweiten Stellung soll die Indikatoreinrichtung hingegen zwischen dem Grundkörper und dem Ring angeordnet sein. Wird nun auf den Ring eine Kraft in radialer Richtung nach innen ausgeübt, so stützt er sich über die Indikatoreinrichtung an der Führungseinrichtung und mithin dem Grundkörper ab, sodass die Verformung des Rings in radialer Richtung begrenzt ist. Vorzugsweise liegt die Indikatoreinrichtung bei unverformtem Ring in radialer Richtung innen an der Führungseinrichtung und in radialer Richtung außen an dem Ring an, sodass auch eine geringfügige Verformung des Rings nicht zugelassen wird.

Die Erfindung betrifft weiterhin eine Kupplungsanordnung zum Verbinden einer ersten fluidführenden Leitung mit einer zweiten fluidführenden Leitung, mit einem Kupplungselement, insbesondere einem Kupplungselement gemäß den vorstehenden Ausführungen, das mit der ersten Leitung verbindbar ist und zur Aufnahme eines mit der zweiten Leitung verbindbaren und einen wenigstens teilweise umlaufenden Rastbund aufweisenden Kupplungsgegenelements ausgestaltet ist, wobei das Kupplungselement über eine Rasteinrichtung verfügt, die einen Grundkörper und einen an dem Grundkörper angeordneten, elastisch verformbaren Ring mit wenigstens einem in radialer Richtung nach innen vorstehenden Rastvorsprung aufweist, wobei in axialer Richtung gesehen zwischen einer Endanschlagsfläche des Grundkörpers und einer Rastfläche des Rastvorsprungs eine Rastaufnahme zur Aufnahme des Rastbunds vorliegt, und wobei der Ring und der Rastvorsprung derart ausgebildet sind, dass der Rastvorsprung bei Verbinden des Kupplungselements und des Kupplungsgegenelements von dem Rastbund in radialer Richtung elastisch nach außen ausgelenkt wird und nach Anordnung des Rastbunds in der Rastaufnahme eine Raststellung einnimmt, in der er den Rastbund zum Halten des Kupplungsgegenelements bezüglich des Kupplungselements rastend hintergreift.

Dabei ist vorgesehen, dass eine Indikatoreinrichtung an der Rasteinrichtung gelagert ist und ein bezüglich eines Führungselements der Indikatoreinrichtung elastisch in radialer Richtung auslenkbares Halteelement aufweist, das in einer Ineingriffstellung in die Rastaufnahme eingreift und die Indikatoreinrichtung in axialer Richtung durch Zusammenwirken mit dem Grundkörper festsetzt, und in einer Außereingriffstellung außerhalb der Rastaufnahme vorliegt und die Indikatoreinrichtung zur Verlagerung in axialer Richtung freigibt.

Auf die Vorteile einer derartigen Ausgestaltung der Kupplungsanordnung beziehungsweise des Kupplungselements wurde bereits hingewiesen. Sowohl die Kupplungsanordnung als auch das Kupplungselement können gemäß den vorstehenden Ausführungen weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine Kupplungsanordnung zum Verbinden von fluidführenden Leitungen, mit einem Kupplungselement sowie einem Kupplungsgegenelement,
- Figur 2: eine schematische Längsschnittdarstellung durch das Kupplungselement und die erste fluidführende Leitung, wobei ein Halteelement einer Indikatoreinrichtung in einer Ineingriffstellung vorliegt,
- Figur 3: eine schematische Längsschnittdarstellung der Kupplungsanordnung, wobei das Halteelement in einer Außereingriffstellung angeordnet ist,
- Figur 4: eine schematische Detaildarstellung des Kupplungselements, sowie
- Figur 5: eine weitere Detaildarstellung des Kupplungselements, wobei zusätzlich das Kupplungsgegenelement erkennbar ist.

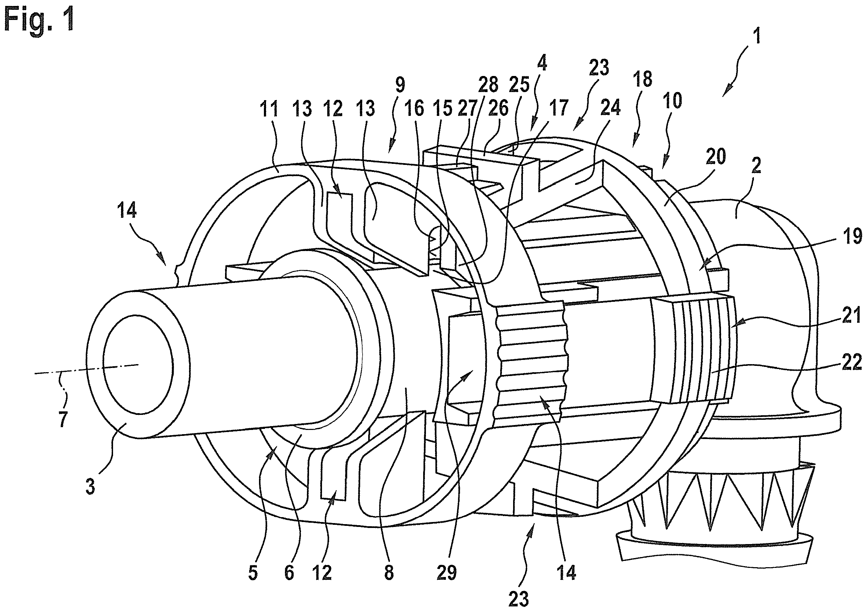

Die Figur 1 zeigt eine schematische Darstellung einer Kupplungsanordnung 1, die zum Verbinden einer ersten fluidführenden Leitung 2 mit einer zweiten fluidführenden Leitung 3 dient. An der ersten fluidführenden Leitung 2 ist hierzu ein Kupplungselement 4 angeordnet und befestigt, wohingegen an der zweiten fluidführenden Leitung 3 ein Kupplungsgegenelement 5 vorliegt, welches in dem hier dargestellten Ausführungsbeispiel einstückig mit der zweiten fluidführenden Leitung 3 ausgestaltet ist. Das Kupplungsgegenelement 5 weist einen Rastbund 6 auf, welcher als in Umfangsrichtung bezüglich einer Längsmittelachse 7 wenigstens teilweise umlaufender Radialvorsprung ausgestaltet ist. Das Kupplungsgegenelement 5 weist weiterhin einen Steckvorsprung 8 auf, welcher zur Einbringung in das Kupplungselement 4 sowie der ersten fluidführenden Leitung 2 ausgebildet ist.

Das Kupplungselement 4 verfügt über eine Rasteinrichtung 9, welche wiederum einen Grundkörper 10 sowie einen elastisch verformbaren Ring 11 aufweist. Der Ring 11 ist bevorzugt in Umfangsrichtung bezüglich der Längsmittelachse 7 durchgehend ausgestaltet, umgreift die Längsmittelachse 7 in Umfangsrichtung insoweit vollständig. An dem Ring ist wenigstens ein in radialer Richtung nach innen vorstehender Rastvorsprung 12 ausgestaltet, welcher in dem hier dargestellten Ausführungsbeispiel aus zwei in Umfangsrichtung voneinander beabstandeten Raststegen 13 besteht. In dem hier dargestellten Ausführungsbeispiel sind zudem zwei derartige Rastvorsprünge 12 ausgebildet, nämlich bezüglich der Längsmittelachse 7 einander diametral gegenüberliegend.

Von den Rastvorsprüngen 12 jeweils in Umfangsrichtung beabstandet sind an dem Ring 11 zwei Betätigungsstellen 14 ausgebildet, an welchen ein Benutzer der Kupplungsanordnung 1 beziehungsweise des Kupplungselements 4 zur elastischen Verformung des Rings 11 angreifen kann. Vorzugsweise sind die Betätigungsstellen 14 in Umfangsrichtung gesehen jeweils mittig zwischen den beiden Rastvorsprüngen 12 angeordnet, jedoch im Gegensatz zu diesem in radialer Richtung gesehen außenseitig an dem Ring 11.

An dem Rastvorsprung 12 ist auf seiner dem Grundkörper 10 zugewandten Seite eine Rastfläche 15 ausgebildet, welche vorzugsweise eben ist und vollständig in einer gedachten Ebene liegt, welche auf der Längsmittelachse 7 senkrecht steht oder bezüglich dieser derart angewinkelt ist, dass die Rastfläche 15 in radialer Richtung nach innen in axialer Richtung auf den Grundkörper 10 zuläuft. Die Rastfläche 15 begrenzt im Längsschnitt bezüglich der Längsmittelachse 7 gesehen zusammen mit einer Endanschlagsfläche 16 des Grundkörpers 10 eine Rastaufnahme 17 zur Aufnahme des Rastbunds 6. Die Rastaufnahme 17 ist in Umfangsrichtung durchgehend ausgebildet, also insbesondere nicht in Umfangsrichtung auf die in Überdeckung mit der Rastfläche 15 liegenden Bereiche beschränkt.

Der Ring 11 und der Rastvorsprung 12 sind nun derart ausgebildet, dass der Rastvorsprung 12 bei Verbinden des Kupplungselements 4 mit dem Kupplungsgegenelement 5, also bei einem Einbringen des Kupplungsgegenelements 5 in das Kupplungselement 4 von dem Rastbund 6 in radialer Richtung elastisch nach außen ausgelenkt wird. Nach Anordnung des Rastbunds 6 in der Rastaufnahme 17 federt der Rastvorsprung 12 in radialer Richtung nach innen zurück und nimmt eine Raststellung ein, in der er den Rastbund 6 rastend hintergreift. Aufgrund dieses Hintergreifens ist das Kupplungsgegenelement 5 bezüglich des Kupplungselements 4 in radialer Richtung in seiner Verlagerung begrenzt, sodass das Kupplungsgegenelement 5 nicht aus dem Kupplungselement 4 herausgelangen kann.

Zusätzlich zu der Rasteinrichtung 9 verfügt das Kupplungselement 4 über eine Indikatoreinrichtung 18. Diese dient der einfachen Kontrolle einer ordnungsgemäßen Befestigung des Kupplungsgegenelements 5 an dem Kupplungselement 4. Die Indikatoreinrichtung 18 ist in axialer Richtung verlagerbar an der Rasteinrichtung 9 gelagert. Sie weist ein Führungselement 19 auf, welches in dem hier dargestellten Ausführungsbeispiel einen Führungsring 20 und einen Führungsvorsprung 21 aufweist. An dem Führungsring 20 und/oder dem Führungsvorsprung 21 ist ein Betätigungsbereich 22 ausgebildet, an welchem ein Benutzer des Kupplungselements 4 zur Verlagerung der Indikatoreinrichtung 18 in axialer Richtung angreifen kann.

Zusätzlich zu dem Führungselement 19 verfügt die Indikatoreinrichtung 18 über ein Halteelement 23. Dieses setzt sich wiederum aus zwei Haltearmen 24 und 25 zusammen, die über einen Quersteg 26 beabstandet von dem Führungselement 19 miteinander verbunden sind. Die Haltearme 24 und 25 gehen jeweils von dem Führungselement 19, insbesondere dem Führungsring 20, aus. Der Quersteg 26 ist in axialer Richtung von dem Führungselement 19, nämlich dessen Führungsring 20, beabstandet ausgebildet. Bevorzugt liegt der Quersteg 26 auf einer radial außenliegenden Außenseite der Haltearme 24 und 25 vor beziehungsweise ist dort an diesen angeformt.

In dem hier dargestellten Ausführungsbeispiel sind an dem Führungselement 19 mehrere Halteelemente 23, nämlich genau zwei Halteelemente 23, ausgebildet. Diese liegen sich bezüglich der Längsmittelachse 7 diametral gegenüber. Die beiden Halteelemente 23 sind identisch ausgestaltet, sodass nachfolgend auf lediglich eines der Halteelemente 23 eingegangen wird. Die Ausführungen sind auch stets auf das jeweils andere der Halteelemente 23 übertragbar. Selbstverständlich kann grundsätzlich eine beliebige Anzahl an Halteelementen 23 vorliegen, also auch lediglich genau ein Halteelement 23 oder aber - wie hier dargestellt - mehrere Halteelemente 23.

Die Indikatoreinrichtung 18 liegt in der gezeigten Darstellung in einer ersten Stellung vor. In dieser liegt der Quersteg 26 an einem Absatz 27 an, der an dem Grundkörper 10 ausgebildet ist und sich in radialer Richtung nach außen erstreckt. Das Halteelement 23 weist einen Haltevorsprung 28 auf, wobei dieser an den Haltearm 24 und 25 ausgebildet ist. Insbesondere ragt der Haltevorsprung 28 in radialer Richtung nach innen. Es kann vorgesehen sein, dass an jedem der Haltearme 24 und 25 jeweils ein separater Haltevorsprung 28 ausgebildet ist.

Es ist zudem erkennbar, dass der Grundkörper 10 eine Führungseinrichtung 29 aufweist, die der linearen Führung der Indikatoreinrichtung 18 dient. Vorzugsweise liegt die Führungseinrichtung 29 in Form eines Führungskanals vor, in welche der Führungsvorsprung 21 des Führungselements 19 eingreift.

Das Halteelement 23, insbesondere die Haltearme 24 und 25, sind elastisch in radialer Richtung auslenkbar. In einer Ineingriffstellung greift es beziehungsweise greifen sie in die Rastaufnahme 17 ein, sodass die Indikatoreinrichtung 18 in axialer Richtung durch Zusammenwirken mit dem Grundkörper 10 festgesetzt ist. Das Zusammenwirken erfolgt einerseits durch das Anliegen des Halteelements 23 an der Endanschlagsfläche 16 des Grundkörpers 10 und in entgegengesetzter axialer Richtung durch Anliegen des Querstegs 26 an dem Absatz 27. Wird hingegen das Halteelement 23 beziehungsweise werden die Haltearme 24 und 25 in eine Außereingriffstellung verlagert, so ist die Indikatoreinrichtung 18 zur Verlagerung in axialer Richtung freigegeben. Das bedeutet einerseits, dass in der Außereingriffstellung das Halteelement 23, insbesondere die Haltearme 24 und 25 beziehungsweise ihre Haltevorsprünge 28 außer Eingriff mit der Endanschlagsfläche 16 stehen und andererseits der Quersteg 26 außer Eingriff mit dem Absatz 27 angeordnet ist.

Die Verlagerung des Halteelements 23 in radialer Richtung von der Ineingriffstellung in die Außereingriffstellung wird durch das Einbringen des Rastbunds 6 in die Rastaufnahme 17 bewirkt. Vorstehend wurde bereits erläutert, dass das Halteelement 23 in seiner Ineingriffstellung in dieser angeordnet ist. Wird nun der Rastbund 6 in axialer Richtung in das Kupplungselement 4 beziehungsweise in die Rastaufnahme 17 eingeschoben, so drängt es das Halteelement 23 in radialer Richtung nach außen aus der Rastaufnahme 17 heraus, sodass das Halteelement 23 nachfolgend in seiner Außereingriffstellung vorliegt.

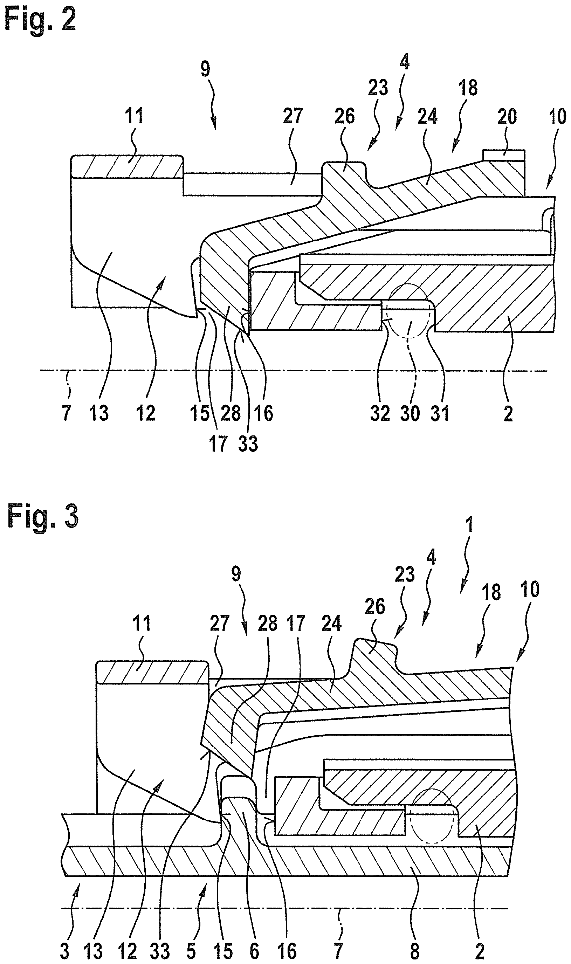

Die Figur 2 zeigt eine schematische Längsschnittdarstellung durch einen Teil der Kupplungsanordnung 1, wobei insbesondere das Kupplungselement 4 sowie die erste fluidführende Leitung 2 zu erkennen sind. Es wird deutlich, dass der Grundkörper 10 bereichsweise in die erste fluidführende Leitung 2 eingreift und dort dem Halten einer Dichtung 30 dient. Die Dichtung 30 wird einerseits von einer Stufe 31, die in der ersten fluidführenden Leitung 2 ausgebildet ist, und andererseits von einer Stirnseite 32 des Grundkörpers 10 in axialer Richtung festgesetzt oder zumindest mit Spiel gehalten.

Dargestellt ist das Halteelement 23 in seiner Ineingriffstellung. Entsprechend greift es in die Rastaufnahme 17 ein. Es wird deutlich, dass das Halteelement 23, insbesondere der Haltevorsprung 28, eine Schrägfläche 33 aufweist, mit welcher der Rastbund 6 bei seinem Einbringen in die Rastaufnahme 17 zusammenwirkt, um das Halteelement 23 aus der Ineingriffstellung in Richtung der Außereingriffstellung beziehungsweise in diese hinein zu drängen. Es ist weiterhin erkennbar, dass das Halteelement 23 in der Ineingriffstellung in axialer Richtung einerseits an der Endanschlagsfläche 16 und andererseits einem Absatz 27 anliegt, sodass die Indikatoreinrichtung 18 als Ganzes in axialer Richtung festgesetzt ist.

Die Figur 3 zeigt erneut eine schematische Längsschnittdarstellung der Kupplungsanordnung 1, wobei sowohl das Kupplungselement 4 als auch das Kupplungsgegenelement 5 dargestellt sind. Das Kupplungsgegenelement 5 ist derart weit in das Kupplungselement 4 eingeschoben, dass der Steckvorsprung 8 in die erste fluidführende Leitung 2 eingreift und dort mit seiner Außenumfangsfläche an der Dichtung 30 dicht anliegt. Entsprechend liegt die Dichtung 30 sowohl an der ersten fluidführenden Leitung 2 als auch an der zweiten fluidführenden Leitung 3 beziehungsweise dem Kupplungsgegenelement 5 an.

In dieser Anordnung des Kupplungsgegenelements 5 ist der Rastbund 6 in der Rastaufnahme 17 angeordnet. Entsprechend wirkt er mit der Schrägfläche 33 zusammen, um das Halteelement 23 aus der Rastaufnahme 17 heraus zu drängen, sodass das Halteelement 23 in seiner Außereingriffstellung vorliegt. In dieser ist der Quersteg 26 in radialer Richtung gesehen über dem Absatz 27 beziehungsweise weiter außen als dieser angeordnet, sodass die Indikatoreinrichtung 18 in axialer Richtung verlagert werden kann, nämlich in Richtung des Rings 11. Insbesondere ist die Indikatoreinrichtung 18 in axialer Richtung derart verlagerbar, dass der Quersteg 26 an dem Ring 11 anliegt, sodass ein Endanschlag für die Indikatoreinrichtung 18 in axialer Richtung realisiert ist.

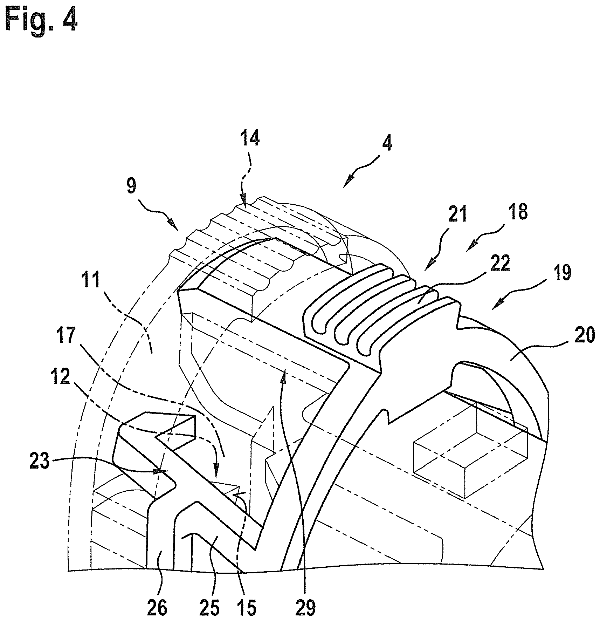

Die Figur 4 zeigt eine schematische Darstellung des Kupplungselements 4, wobei die Indikatoreinrichtung 18 in ihrer zweiten Stellung angeordnet ist. In dieser liegt - wie bereits erläutert - der Quersteg 26 an dem Ring 11 an. Gleichzeitig ist der Führungsvorsprung 21 im Längsschnitt gesehen zwischen dem Ring 11 und der Führungseinrichtung 29 angeordnet. Die Führungseinrichtung 29 ist vorzugsweise starr ausgebildet oder zumindest steifer als der Ring 11. Bei einer elastischen Verformung des Rings 11 stützt sich dieser insoweit in radialer Richtung nach innen über die Indikatoreinrichtung 18 beziehungsweise deren Führungselement 19 an der Führungseinrichtung 29 der Rasteinrichtung 9 ab. Entsprechend wird eine Verformung des Rings 11 in radialer Richtung nach innen unterbunden oder zumindest begrenzt.

Auch bei Kraftausübung auf den Ring 11 an den Betätigungsstellen 14 in radialer Richtung nach innen kann insoweit bei Anordnung der Indikatoreinrichtung 18 in ihrer zweiten Stellung keine Verformung des Rings 11 derart bewirkt werden, dass die Rastverbindung zwischen dem Rastvorsprung 12 von dem Rastbund 6 und entsprechend zwischen dem Kupplungselement 4 und dem Kupplungsgegenelement 5 gelöst wird. Bei Anordnung der Indikatoreinrichtung 18 in der zweiten Stellung ist insoweit die Rastverbindung zwischen Kupplungselement 4 und Kupplungsgegenelement 5 gegen unbeabsichtigtes Lösen zusätzlich gesichert.

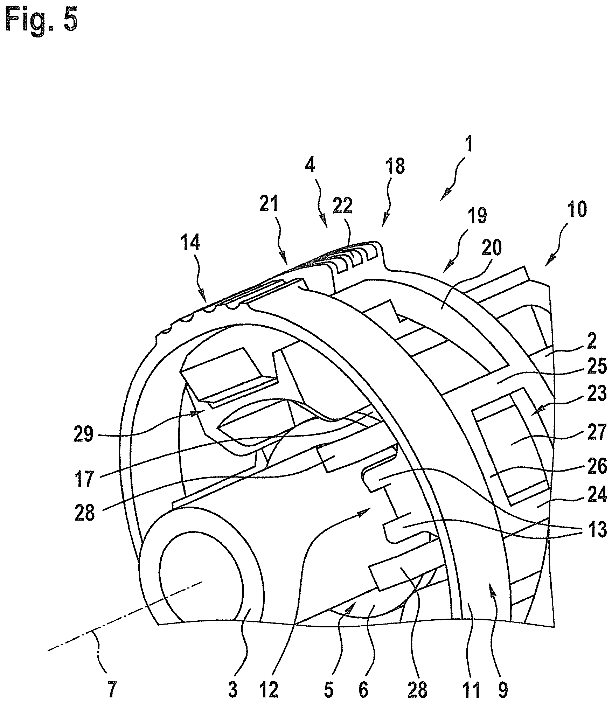

Die Figur 5 zeigt eine weitere schematische Darstellung des Kupplungselements 4, wobei zusätzlich das Kupplungsgegenelement 5 gezeigt ist. Das Kupplungsgegenelement 5 ist bezüglich des Kupplungselements 4 derart angeordnet, dass der Rastbund 6 in der Rastaufnahme 17 vorliegt. Zudem wurde die Indikatoreinrichtung 18 bereits in ihre zweite Stellung verlagert. In dieser verrastet das Halteelement 23 mit dem Rastbund 6, sodass dieser nicht nur mittels der Rasteinrichtung 9, also dem Rastvorsprung 12, sondern zusätzlich mittels des Halteelements 23 rastend gehalten ist. Durch das Hintergreifen des Rastbunds 6 durch das Halteelement 23 wird die Indikatoreinrichtung 18 in der zweiten Stellung festgesetzt, kann also nicht mehr ohne weiteres aus dieser heraus verlagert werden, insbesondere in Richtung der ersten Stellung oder in diese hinein. Entsprechend ist eine zuverlässige Sicherung der Indikatoreinrichtung 18 in der ersten Stellung und entsprechend eine zuverlässige Sicherung des Rings 11 gegen ungewollte Betätigung gegeben.

Insgesamt lassen sich mit dem Kupplungselement 4 beziehungsweise der Kupplungsanordnung 1 Verbindungen zwischen fluidführenden Leitungen 2 und 3 realisieren, welche zum einen äußerst zuverlässig und langlebig sind und zum anderen eine einfache Montage ermöglichen. Ein die Montage vornehmender Benutzer der Kupplungsanordnung 1 kann anhand der Stellung der Indikatoreinrichtung 18 auf einfache Art und Weise ablesen, ob die Rastverbindung zwischen dem Kupplungselement 4 und Kupplungsgegenelement 5 endgültig und zuverlässig hergestellt ist. Dies wird durch das Verrasten des Halteelements 23 mit dem Rastbund 6 noch verstärkt, bei welchem ein deutlich wahrnehmbares Rastgeräusch entsteht. Um eine deutliche Indikatorwirkung der Indikatoreinrichtung 18 zu erzielen, weist bevorzugt die Indikatoreinrichtung 18 wenigstens teilweise, insbesondere vollständig, eine andere Farbe auf als die Rasteinrichtung 9.

## Patentansprüche

1. Kupplungselement (4) zum Verbinden einer ersten fluidführenden Leitung (2) mit einer zweiten fluidführenden Leitung (3), wobei das Kupplungselement (4) mit der ersten Leitung (2) verbindbar ist und zur Aufnahme eines mit der zweiten Leitung (3) verbindbaren und einen wenigstens teilweise umlaufenden Rastbund (6) aufweisenden Kupplungsgegenelements (5) ausgestaltet ist, wobei das Kupplungselement (4) über eine Rasteinrichtung (9) verfügt, die einen Grundkörper (10) und einen an dem Grundkörper (10) angeordneten, elastisch verformbaren Ring (11) mit wenigstens einem in radialer Richtung nach innen vorstehenden Rastvorsprung (12) aufweist, wobei in axialer Richtung gesehen zwischen einer Endanschlagsfläche (16) des Grundkörpers (10) und einer Rastfläche (15) des Rastvorsprungs (12) eine Rastaufnahme (17) zur Aufnahme des Rastbunds (6) vorliegt, und wobei der Ring (11) und der Rastvorsprung (12) derart ausgebildet sind, dass der Rastvorsprung (12) bei Verbinden des Kupplungselements (4) und des Kupplungsgegenelements (5) von dem Rastbund (6) in radialer Richtung elastisch nach außen ausgelenkt wird und nach Anordnung des Rastbunds (6) in der Rastaufnahme (17) eine Raststellung einnimmt, in der er den Rastbund (6) zum Halten des Kupplungsgegenelements (5) bezüglich des Kupplungselements (4) rastend hintergreift, und wobei eine Indikatoreinrichtung (18) an der Rasteinrichtung (9) gelagert ist, **dadurch gekennzeichnet, dass** die Indikatoreinrichtung (18) ein bezüglich eines Führungselements (19) der Indikatoreinrichtung (18) elastisch in radialer Richtung auslenkbares Halteelement (23) aufweist, das in einer Ineingriffstellung in die Rastaufnahme (17) eingreift und die Indikatoreinrichtung (18) in axialer Richtung durch Zusammenwirken mit dem Grundkörper (10) festsetzt, und in einer Außereingriffstellung außerhalb der Rastaufnahme (17) vorliegt und die Indikatoreinrichtung (18) zur Verlagerung in axialer Richtung freigibt.

2. Kupplungselement nach Anspruch 1, **dadurch gekennzeichnet, dass** eine Verlagerung der Indikatoreinrichtung (18) in axialer Richtung bei Vorliegen der Ineingriffstellung des Halteelements (23) einerseits von der Endanschlagsfläche (16) und andererseits von einem an dem Grundkörper (10) ausgebildeten Absatz (27) begrenzt ist.

3. Kupplungselement nach einem der vorhergehenden Ansprüche, **dadurch gekennzeichnet, dass** das Halteelement (23) derart ausgestaltet ist, dass es bei einem Einbringen des Rastbunds (6) in die Rastaufnahme (17) in radialer Richtung nach außen aus der Rastaufnahme (17) herausgedrängt und in die Außereingriffstellung verlagert wird.

4. Kupplungselement nach Anspruch 2, **dadurch gekennzeichnet, dass** bei Anordnung des Halteelements (23) in der Außereingriffstellung die Indikatoreinrichtung (18) außer Eingriff mit dem Absatz (27) vorliegt, sodass eine Verlagerung des Führungselements (19) in Richtung des Rings (11) freigegeben ist.

5. Kupplungselement nach einem der vorhergehenden Ansprüche, **dadurch gekennzeichnet, dass** das Halteelement (23) wenigstens zwei Haltearme (24 ,25) aufweist, die in Umfangsrichtung gesehen beidseitig des Rastvorsprungs (12) angeordnet sind.

6. Kupplungselement nach Anspruch5, **dadurch gekennzeichnet, dass** die wenigstens zwei Haltearme (24, 25) jeweils von dem Führungselement (19) ausgehen und mittels eines von dem Führungselement (19) beabstandeten Querstegs (26) miteinander verbunden sind.

7. Kupplungselement nach Anspruch 6, **dadurch gekennzeichnet, dass** in der Ineingriffstellung der Quersteg (26) mit dem Absatz (27) zur Begrenzung der Verlagerung der Indikatoreinrichtung (18) in axialer Richtung zusammenwirkt.

8. Kupplungselement nach einem der vorhergehenden Ansprüche, **dadurch gekennzeichnet, dass** die Indikatoreinrichtung (18) bei Anordnung des Halteelements (23) in der Außereingriffstellung zur Verlagerung zwischen einer ersten Stellung und einer zweiten Stellung freigegeben ist, wobei in der ersten Stellung ein Haltevorsprung (28) des Halteelements (23) in axialer Richtung gesehen in Überdeckung mit der Rastaufnahme (17) vorliegt und in der zweiten Stellung die Indikatoreinrichtung (18), insbesondere der Quersteg (26), mit dem Ring (11) zusammenwirkt, um eine Verlagerung über die zweite Stellung hinaus zu verhindern.

9. Kupplungselement nach einem der vorhergehenden Ansprüche, **dadurch gekennzeichnet, dass** der Grundkörper (10) eine Führungseinrichtung (29) zur linearen Führung der Indikatoreinrichtung (18) aufweist, wobei die Führungseinrichtung (29) in axialer Richtung gesehen in Überdeckung mit dem Ring (11) vorliegt und die Indikatoreinrichtung (18) in der zweiten Stellung zwischen dem Grundkörper (10) und dem Ring (11) vorliegt, sodass sich der Ring (11) bei einer elastischen Verformung in radialer Richtung nach innen über die Indikatoreinrichtung (18) an dem Grundkörper (10) zur Begrenzung der Verformung abstützt.

10. Kupplungsanordnung (1) zum Verbinden einer ersten fluidführenden Leitung (2) mit einer zweiten fluidführenden Leitung (3), mit einem Kupplungselement (4) nach einem oder mehreren der vorhergehenden Ansprüche und mit einem Kupplungsgegenelement (5).

## Claims

1. A coupling element (4) for connecting a first fluid-conducting line (2) to a second fluid-conducting line (3), wherein the coupling element (4) can be connected to the first line (2) and is designed to receive a coupling counter-element (5) which can be connected to the second line (3) and which comprises an at least partially circumferential latching collar (6), wherein the coupling element (4) has a latching device (9) which comprises a main part (10) and an elastically deformable ring (11), arranged on the main part (10), with at least one latching projection (12) protruding inward in the radial direction, wherein, viewed in the axial direction, between an end abutment surface (16) of the main part (10) and a latching surface (15) of the latching projection (12), a latch receiving area (17) for receiving the latching collar (6) lies, and wherein the ring (11) and the latching projection (12) are formed in such a manner that, when the coupling element (4) and the coupling counter-element (5) are connected, the latching projection (12) is elastically deflected outward in the radial direction by the latching collar (6), and, after the arrangement of the latching collar (6) in the latch receiving area (17), the latching projection assumes a latched position in which it pushes the latching collar (6) from behind in a latching manner in order to retain the coupling counter-element (5) relative to the coupling element (4), and wherein an indicator device (18) is mounted in the latching device (9), **characterized in that** the indicator device (18) has a retaining element (23) which can be elastically deflected in the radial direction relative to a guide element (19) of the indicator device (18), and which in a latched position engages in the latch receiving area (17) and secures the indicator device (18) in the axial direction by interacting with the main part (10), and in a non-latched position lies outside of the latch receiving area (17) and releases the indicator device (18) to move in the axial direction.

2. The coupling element according to Claim 1, **characterized in that**, in the latched position of the retaining element (23), a movement of the indicator device (18) in the axial direction is limited, on the one hand, by the end abutment surface (16) and, on the other hand, by an offset (27) formed on the main part (10).

3. The coupling element according to any one of the preceding claims, **characterized in that** the retaining element (23) is formed in such a manner that, when the latching collar (6) is introduced into the latch receiving area (17), it is pushed outward in the radial direction out of the latch receiving area (17) and is moved into the non-latched position.

4. The coupling element according to claim 2, **characterized in that**, when the retaining element (23) is arranged in the non-latched position, the indicator device (18) is disengaged from the offset (27), so that a movement of the guide element (19) in the direction of the ring (11) is released.

5. The coupling element according to any one of the preceding claims, **characterized in that** the retaining element (23) has at least two retaining arms (24, 25) which are arranged, viewed in the circumferential direction, on both sides of the latching projection (12).

6. The coupling element according to claim 5, **characterized in that** the at least two retaining arms (24, 25) each start from the guide element (19) and are connected to one another by means of a transverse web (26) spaced from the guide element (19).

7. The coupling element according to claim 6, **characterized in that**, in the latched position, the transverse web (26) interacts with the offset (27) in order to limit the movement of the indicator device (18) in the axial direction.

8. The coupling element according to any one of the preceding claims, **characterized in that**, when the retaining element (23) is arranged in the non-latched position, the indicator device (18) is released to move between a first position and a second position, wherein, in the first position, viewed in the axial direction, a retaining projection (28) of the retaining element (23) overlaps with the latch receiving area (17), and, in the second position, the indicator device (18), in particular the transverse web (26), interacts with the ring (11) in order to prevent a movement beyond the second position.

9. The coupling element according to any one of the preceding claims, **characterized in that** the main part (10) has a guide device (29) for linear guiding of the indicator device (18), wherein, viewed in the axial direction, the guide device (29) overlaps with the ring (11), and the indicator device (18) is in the second position between the main part (10) and the ring (11), so that, in the case of an elastic deformation in the radial direction inward, the ring (11) is supported via the indicator device (18) on the main part (10) for limiting the deformation.

10. A coupling assembly (1) for connecting a first fluid-conducting line (2) to a second fluid-conducting line (3), with a coupling element (4) according to one or more of the preceding claims, and a coupling counter-element (5).

## Revendications

1. Élément d'accouplement (4) pour relier une première conduite de fluide (2) à une deuxième conduite de fluide (3), l'élément d'accouplement (4) pouvant être relié à la première conduite (2) et étant conçu pour recevoir un élément d'accouplement complémentaire (5) pouvant être relié à la deuxième conduite (3) et présentant un collet d'encliquetage (6) au moins partiellement périphérique, l'élément d'accouplement (4) présentant un dispositif d'encliquetage (9) qui présente un corps de base (10) et une bague (11) déformable élastiquement, disposée sur le corps de base (10), qui présente au moins une saillie d'encliquetage (12) faisant saillie vers l'intérieur dans la direction radiale, un logement d'encliquetage (17) destiné à recevoir le collet d'encliquetage (6) se trouvant, vu dans la direction axiale, entre une surface de butée finale (16) du corps de base (10) et une surface d'encliquetage (15) de la saillie d'encliquetage (12), et la bague (11) et la saillie d'encliquetage (12) étant réalisées de telle sorte que la saillie d'encliquetage (12) est déviée élastiquement vers l'extérieur dans la direction radiale par le collet d'encliquetage (6) et prend une position d'encliquetage après la disposition du collet d'encliquetage (6) dans le logement d'encliquetage (17), dans lequel elle s'engage par encliquetage derrière le collet d'encliquetage (6) pour maintenir l'élément d'accouplement complémentaire (5) par rapport à l'élément d'accouplement (4), et un dispositif indicateur (18) étant monté sur le dispositif d'encliquetage (9), **caractérisé en ce que** le dispositif indicateur (18) présente un élément de retenue (23) qui peut être dévié élastiquement dans la direction radiale par rapport à un élément de guidage (19) du dispositif indicateur (18) et qui, dans une position engagée, s'engage dans le logement d'encliquetage (17) et fixe le dispositif indicateur (18) dans la direction axiale en coopérant avec le corps de base (10), et qui, dans une position désengagée, se trouve à l'extérieur du logement d'encliquetage (17) et permet au dispositif indicateur (18) de se déplacer dans la direction axiale.

2. Élément d'accouplement selon la revendication 1, **caractérisé en ce qu'**un déplacement du dispositif indicateur (18) dans la direction axiale en cas de position engagée de l'élément de retenue (23) est limité, d'une part, par la surface de butée finale (16) et, d'autre part, par un épaulement (27) formé sur le corps de base (10).

3. Élément d'accouplement selon l'une des revendications précédentes, **caractérisé en ce que** l'élément de retenue (23) est conçu de telle sorte que, lorsque le collet d'encliquetage (6) est introduit dans le logement d'encliquetage (17), il est repoussé du logement d'encliquetage (17) vers l'extérieur dans la direction radiale et déplacé dans la position désengagée.

4. Élément d'accouplement selon la revendication 2, **caractérisé en ce que**, lorsque l'élément de retenue (23) est disposé dans la position désengagée, le dispositif indicateur (18) est désengagé de l'épaulement (27), de sorte qu'un déplacement de l'élément de guidage (19) en direction de la bague (11) est permis.

5. Élément d'accouplement selon l'une des revendications précédentes, **caractérisé en ce que** l'élément de retenue (23) présente au moins deux bras de retenue (24 ,25) qui, vus dans la direction périphérique, sont disposés de part et d'autre de la saillie d'encliquetage (12).

6. Élément d'accouplement selon la revendication 5, **caractérisé en ce que** lesdits au moins deux bras de retenue (24, 25) s'étendent chacun à partir de l'élément de guidage (19) et sont reliés l'un à l'autre au moyen d'une traverse (26) espacée de l'élément de guidage (19).

7. Élément d'accouplement selon la revendication 6, **caractérisé en ce que** dans la position engagée, la traverse (26) coopère avec l'épaulement (27) pour limiter le déplacement du dispositif indicateur (18) dans la direction axiale.

8. Élément d'accouplement selon l'une des revendications précédentes, **caractérisé en ce que**, lorsque l'élément de retenue (23) est disposé dans la position désengagée, le dispositif indicateur (18) peut se déplacer entre une première position et une deuxième position, dans lequel, dans la première position, une saillie de retenue (28) de l'élément de retenue (23) se trouve, vue dans la direction axiale, en recouvrement avec le logement d'encliquetage (17) et, dans la deuxième position, le dispositif indicateur (18), en particulier la traverse (26), coopère avec la bague (11) pour empêcher un déplacement au-delà de la deuxième position.

9. Élément d'accouplement selon l'une des revendications précédentes, **caractérisé en ce que** le corps de base (10) présente un dispositif de guidage (29) pour le guidage linéaire du dispositif indicateur (18), le dispositif de guidage (29) se trouvant, vu dans la direction axiale, en recouvrement avec la bague (11), et le dispositif indicateur (18) se trouvant, dans la deuxième position, entre le corps de base (10) et la bague (11), de sorte qu'en cas de déformation élastique vers l'intérieur dans la direction radiale, la bague (11) s'appuie par l'intermédiaire du dispositif indicateur (18) sur le corps de base (10) afin de limiter la déformation.

10. Agencement d'accouplement (1) pour relier une première conduite de fluide (2) à une deuxième conduite de fluide (3), comprenant un élément d'accouplement (4) selon l'une ou plusieurs des revendications précédentes et un élément d'accouplement complémentaire (5).
